# EUROPÄISCHE PATENTSCHRIFT

(11) **EP 3 178 037 B1**
(45) Veröffentlichungstag und Bekanntmachung des Hinweises auf die Patenterteilung: **30.09.2020**
(21) Anmeldenummer: 15750672.6
(22) Anmeldetag: 04.08.2015
(51) Int. Cl.: G06K 9/20, G06K 9/24

(54) **BILDERFASSUNGSVORRICHTUNG ZUM ERFASSEN EINES ERSTEN BILDES EINES IDENTIFIKATIONSDOKUMENTES IN EINEM ERSTEN WELLENLÄNGENBEREICH UND EINES ZWEITEN BILDES DES IDENTIFIKATIONSDOKUMENTES IN EINEM ZWEITEN WELLENLÄNGENBEREICH**
IMAGE ACQUISITION DEVICE FOR ACQUIRING A FIRST IMAGE OF AN IDENTIFICATION DOCUMENT IN A FIRST WAVELENGTH RANGE AND A SECOND IMAGE OF THE IDENTIFICATION DOCUMENT IN A SECOND WAVELENGTH RANGE
DISPOSITIF DE DÉTECTION D'IMAGE SERVANT À DÉTECTER UNE PREMIÈRE IMAGE D'UN DOCUMENT D'IDENTIFICATION DANS UNE PREMIÈRE PLAGE DE LONGUEURS D'ONDE ET UNE SECONDE IMAGE DU DOCUMENT D'IDENTIFICATION DANS UNE SECONDE PLAGE DE LONGUEURS D'ONDE

(30) Priorität: 06.08.2014 DE 102014111171
(43) Veröffentlichungstag der Anmeldung: 14.06.2017
(73) Patentinhaber: Bundesdruckerei GmbH, 10969 Berlin (DE)
(72) Erfinder: FISCHBECK, Matthias, 30826 Garbsen (DE); SCHÜRING, Andreas, 30827 Garbsen (DE); THATER, Marcel, 30952 Ronnenberg (DE); SCHÜRING, Jan-Ole, 30827 Garbsen (DE)
(74) Vertreter: Patentship Patentanwaltsgesellschaft mbH
(86) Internationale Anmeldenummer: PCT/EP2015/067868
(87) Internationale Veröffentlichungsnummer: WO 2016/020341

(56) Entgegenhaltungen:
- WO-A1-01/54077
- WO-A1-2014/005085
- WO-A1-2014/023514
- US-A1- 2010 128 964

## Beschreibung

Die vorliegende Erfindung betrifft das Gebiet der Bilderfassung von Identifikationsdokumenten in unterschiedlichen Wellenlängenbereichen.

Im Bereich der Herstellung und Prüfung von Identifikationsdokumenten ist eine Erfassung von Bildern in unterschiedlichen Wellenlängenbereichen von besonderer Bedeutung. Durch die Erfassung von Bildern in unterschiedlichen Wellenlängenbereichen kann eine Prüfung von Identifikationsdokumenten realisiert werden, welche Sicherheitsmerkmale mit wellenlängenabhängigen optischen Eigenschaften aufweisen.

Zur Erfassung von Bildern von Identifikationsdokumenten werden industrielle Bildkameras mit optischen Objektiven eingesetzt. Die Bildkameras sind dabei üblicherweise in einer festen Entfernung zu den Identifikationsdokumenten angeordnet.

Da in bestimmten Wellenlängenbereichen eine automatische Fokussierung optischer Objektive, d.h. ein Autofokus, nicht möglich ist, und zugleich die Brennweite optischer Objektive wellenlängenabhängig ist, kann eine genaue Fokussierung optischer Objektive in unterschiedlichen Wellenlängenbereichen bei fester Entfernung zumeist nicht realisiert werden. Bei einer Erfassung von Bildern in unterschiedlichen Wellenlängenbereichen kann dies dazu führen, dass die erfassten Bilder nicht hinreichend fokussiert und somit unscharf erfasst werden.

Die Druckschrift **D1,** WO 2014/005085 A1**,** zeigt in der Fig. 1 eine Ausführungsform eines Dokumentenerfassungssystems 100 mit einer Quelle 102, die elektromagnetische Strahlung erzeugt. Die erzeugte elektromagnetische Strahlung wird auf ein Dokument 104 gestrahlt. Das Dokument 104 kann beispielsweise eine Banknote sein.

Es ist daher die Aufgabe der vorliegenden Erfindung, ein effizientes Konzept zum Erfassen eines ersten Bildes eines Identifikationsdokumentes in einem ersten Wellenlängenbereich und eines zweiten Bildes des Identifikationsdokumentes in einem zweiten Wellenlängenbereich zu schaffen.

Diese Aufgabe wird durch die Merkmale der unabhängigen Patentansprüche gelöst. Vorteilhafte Weiterbildungsformen sind Gegenstand der abhängigen Patentansprüche, der Beschreibung sowie der Figuren.

Die Erfindung basiert auf der Erkenntnis, dass die obige Aufgabe durch einen verfahrbaren Führungsschlitten gelöst werden kann, auf welchem eine Bildkamera mit einem optischen Objektiv angeordnet ist.

Der Führungsschlitten kann zwischen einer ersten Halteposition in einer ersten Entfernung zu einer Dokumentenauflage und einer zweiten Halteposition in einer zweiten Entfernung zu der Dokumentenauflage verfahren werden. Die erste Halteposition und die zweite Halteposition können derart bestimmt sein, dass das optische Objektiv an der ersten Halteposition in dem ersten Wellenlängenbereich und an der zweiten Halteposition in dem zweiten Wellenlängenbereich genau fokussiert ist. Die Bildkamera kann das erste Bild an der ersten Halteposition in dem ersten Wellenlängenbereich erfassen und das zweite Bild an der zweiten Halteposition in dem zweiten Wellenlängenbereich erfassen. Dadurch wird erreicht, dass das erste Bild in dem ersten Wellenlängenbereich und das zweite Bild in dem zweiten Wellenlängenbereich mit hoher Qualität und Bildschärfe erfasst werden können.

Gemäß einem ersten Aspekt betrifft die Erfindung eine Bilderfassungsvorrichtung zum Erfassen eines ersten Bildes eines Identifikationsdokumentes in einem ersten Wellenlängenbereich und eines zweiten Bildes des Identifikationsdokumentes in einem zweiten Wellenlängenbereich, mit einer Dokumentenauflage für eine Auflage des Identifikationsdokumentes, einem verfahrbaren Führungsschlitten, welcher zwischen einer ersten Halteposition in einer ersten Entfernung zu der Dokumentenauflage und einer zweiten Halteposition in einer zweiten Entfernung zu der Dokumentenauflage verfahrbar ist, und einer Bildkamera mit einem optischen Objektiv, wobei das optische Objektiv in dem ersten Wellenlängenbereich einen ersten Brennpunkt in der ersten Entfernung aufweist, wobei das optische Objektiv in dem zweiten Wellenlängenbereich einen zweiten Brennpunkt in der zweiten Entfernung aufweist, und wobei die Bildkamera auf dem verfahrbaren Führungsschlitten angeordnet und ausgebildet ist, das erste Bild in dem ersten Wellenlängenbereich an der ersten Halteposition zu erfassen und das zweite Bild in dem zweiten Wellenlängenbereich an der zweiten Halteposition zu erfassen. Dadurch wird der Vorteil erreicht, dass ein effizientes Konzept zum Erfassen eines ersten Bildes eines Identifikationsdokumentes in einem ersten Wellenlängenbereich und eines zweiten Bildes des Identifikationsdokumentes in einem zweiten Wellenlängenbereich realisiert werden kann.

Die erste Halteposition und die zweite Halteposition des verfahrbaren Führungsschlittens können beispielsweise mittels einer Kalibrierung unter Verwendung der Bildkamera und des optischen Objektivs bestimmt werden. Das optische Objektiv ist beim Erfassen des ersten Bildes in dem ersten Wellenlängenbereich und beim Erfassen des zweiten Bildes in dem zweiten Wellenlängenbereich auf die Dokumentenauflage fokussiert.

Das Identifikationsdokument kann eines der folgenden Identifikationsdokumente sein: ein Identitätsdokument, wie beispielsweise ein Personalausweis, ein Reisepass, ein Zugangskontrollausweis, ein Berechtigungsausweis, ein Unternehmensausweis, ein Steuerzeichen, ein Ticket, eine Geburtsurkunde, ein Führerschein, ein Kraftfahrzeugausweis, oder ein Zahlungsmittel, wie beispielsweise eine Bankkarte oder eine Kreditkarte.

Das Identifikationsdokument kann einen elektronisch auslesbaren Schaltkreis, beispielsweise einen RFID-Chip, umfassen. Das Identifikationsdokument kann ein- oder mehrlagig sowie papier- und/oder kunststoffbasiert sein. Das Identifikationsdokument kann aus kunststoffbasierten Folien aufgebaut sein, welche zu einem Kartenkörper mittels Verkleben und/oder Laminieren zusammengefügt sind, wobei die kunststoffbasierten Folien ähnliche stoffliche Eigenschaften aufweisen können.

Gemäß einer Ausführungsform ist das optische Objektiv ein optisches Festbrennweiten-Objektiv. Dadurch wird der Vorteil erreicht, dass die optischen Eigenschaften des optischen Objektivs verbessert werden können.

Das Festbrennweiten-Objektiv weist in dem ersten Wellenlängenbereich eine erste feste Brennweite oder einen ersten festen Brennweitenbereich auf, und weist in dem zweiten Wellenlängenbereich eine zweite feste Brennweite oder einen zweiten festen Brennweitenbereich auf.

Das optische Objektiv kann ein optisches Makro-Objektiv sein. Dadurch wird der Vorteil erreicht, dass die optischen Eigenschaften des optischen Objektivs für kurze Entfernungen verbessert werden können.

Gemäß einer Ausführungsform umfasst die Bilderfassungsvorrichtung eine Führungsschiene, wobei der verfahrbare Führungsschlitten auf der Führungsschiene verfahrbar angeordnet ist. Dadurch wird der Vorteil erreicht, dass der verfahrbare Führungsschlitten zwischen der ersten Halteposition und der zweiten Halteposition wiederholbar und genau verfahren werden kann.

Gemäß einer Ausführungsform ist die Führungsschiene eine geradlinige Führungsschiene, wobei der verfahrbare Führungsschlitten auf der geradlinigen Führungsschiene geradlinig verfahrbar angeordnet ist. Dadurch wird der Vorteil erreicht, dass der verfahrbare Führungsschlitten auf kurzem Weg zwischen der ersten Halteposition und zweiten Halteposition verfahren werden kann.

Gemäß einer Ausführungsform weist die geradlinige Führungsschiene eine geradlinige Führungsrichtung auf, wobei die Dokumentenauflage eine Dokumentenauflageebene aufweist, und wobei die geradlinige Führungsrichtung senkrecht zu der Dokumentenauflageebene ist. Dadurch wird der Vorteil erreicht, dass der verfahrbare Führungsschlitten effizient zwischen der ersten Halteposition und zweiten Halteposition verfahren werden kann.

Gemäß einer Ausführungsform weist die Führungsschiene an der ersten Halteposition ein erstes Halteelement und an der zweiten Halteposition ein zweites Halteelement auf, um den verfahrbaren Führungsschlitten an der ersten Halteposition und an der zweiten Halteposition zu halten oder anzuhalten. Dadurch wird der Vorteil erreicht, dass der verfahrbare Führungsschlitten effizient an der ersten Halteposition und an der zweiten Halteposition an der Führungsschiene befestigt werden kann.

Gemäß einer Ausführungsform umfasst das erste Halteelement oder das zweite Halteelement eine Kerbe, einen Vorsprung, eine Rastung, einen elektrischen Schalter zum Anhalten eines elektrischen Antriebs, einen Positionsdetektor, insbesondere eine optische Schranke, oder eine Bremse. Dadurch wird der Vorteil erreicht, dass das erste Halteelement oder das zweite Halteelement effizient realisiert werden können.

Die Kerbe, der Vorsprung, die Rastung oder die Bremse können den verfahrbaren Führungsschlitten mechanisch halten oder anhalten. Der elektrische Schalter, der Positionsdetektor oder die optische Schranke können ein elektrisches Signal zum Anhalten eines elektrischen Antriebs erzeugen. Der elektrische Antrieb kann vorgesehen sein, den verfahrbaren Führungsschlitten zwischen der ersten Halteposition und der zweiten Halteposition zu verfahren.

Gemäß einer Ausführungsform umfasst die Bilderfassungsvorrichtung einen elektrischen Antrieb, insbesondere einen Schrittmotor, wobei der elektrische Antrieb ausgebildet ist, den verfahrbaren Führungsschlitten zwischen der ersten Halteposition in der ersten Entfernung zu der Dokumentenauflage und der zweiten Halteposition in der zweiten Entfernung zu der Dokumentenauflage zu verfahren, oder wobei der verfahrbare Führungsschlitten manuell verfahrbar ist. Dadurch wird der Vorteil erreicht, dass der verfahrbare Führungsschlitten effizient zwischen der ersten Halteposition und der zweiten Halteposition verfahren werden kann. Der elektrische Antrieb kann ein mechanisches Getriebe zum Verfahren des verfahrbaren Führungsschlittens zwischen der ersten Halteposition und der zweiten Halteposition umfassen.

Gemäß einer Ausführungsform ist der elektrische Antrieb ausgebildet, an der ersten Halteposition des verfahrbaren Führungsschlittens oder an der zweiten Halteposition des verfahrbaren Führungsschlittens anzuhalten. Dadurch wird der Vorteil erreicht, dass bei Erreichen der ersten Halteposition durch den verfahrbaren Führungsschlitten oder bei Erreichen der zweiten Halteposition durch den verfahrbaren Führungsschlitten der verfahrbare Führungsschlitten effizient angehalten werden kann.

Gemäß einer Ausführungsform umfasst die Bilderfassungsvorrichtung eine Steuerung, welche ausgebildet ist, den elektrischen Antrieb zum Anhalten des Führungsschlittens an der ersten Halteposition oder zum Anhalten des Führungsschlittens an der zweiten Halteposition zu steuern. Dadurch wird der Vorteil erreicht, dass eine Steuerung und/oder Regelung des elektrischen Antriebs realisiert werden kann.

Gemäß einer Ausführungsform ist die Steuerung ausgebildet, den elektrischen Antrieb zum Anhalten des Führungsschlittens an der ersten Halteposition auf Basis eines ersten vorgespeicherten Haltepositionsindikators zu steuern, und den elektrischen Antrieb zum Anhalten des Führungsschlittens an der zweiten Halteposition auf Basis eines zweiten vorgespeicherten Haltepositionsindikators zu steuern, wobei der erste vorgespeicherte Haltepositionsindikator die erste Halteposition anzeigt, und wobei der zweite vorgespeicherte Haltepositionsindikator die zweite Halteposition anzeigt. Dadurch wird der Vorteil erreicht, dass vorgespeicherte Haltepositionsindikatoren zum Steuern und/oder Regeln des elektrischen Antriebs verwendet werden können.

Der erste vorgespeicherte Haltepositionsindikator und der zweite vorgespeicherte Haltepositionsindikator können in einem Speicher der Steuerung abgelegt sein. Der erste vorgespeicherte Haltepositionsindikator und der zweite vorgespeicherte Haltepositionsindikator können eine Zeitdauer und/oder eine Anzahl von Umdrehungen des elektrischen Antriebs zum Verfahren des verfahrbaren Führungsschlittens zwischen der ersten Halteposition und der zweiten Halteposition anzeigen. Der erste vorgespeicherte Haltepositionsindikator und der zweite vorgespeicherte Haltepositionsindikator können mittels der Steuerung programmierbar sein.

Gemäß einer Ausführungsform umfasst die Bilderfassungsvorrichtung eine Beleuchtungseinrichtung, welche ausgebildet ist, die Dokumentenauflage mit einem ersten Licht in dem ersten Wellenlängenbereich und mit einem zweiten Licht in dem zweiten Wellenlängenbereich zu beleuchten. Dadurch wird der Vorteil erreicht, dass das erste Bild in dem ersten Wellenlängenbereich und das zweite Bild in dem zweiten Wellenlängenbereich effizient erfasst werden können.

Gemäß einer Ausführungsform umfasst die Beleuchtungseinrichtung eine erste Lichtquelle und eine zweite Lichtquelle, wobei die erste Lichtquelle ausgebildet ist, die Dokumentenauflage mit dem ersten Licht in dem ersten Wellenlängenbereich unter einem ersten Beleuchtungswinkel zu beleuchten, und wobei die zweite Lichtquelle ausgebildet ist, die Dokumentenauflage mit dem zweiten Licht in dem zweiten Wellenlängenbereich unter einem zweiten Beleuchtungswinkel zu beleuchten. Dadurch wird der Vorteil erreicht, dass das erste Licht in dem ersten Wellenlängenbereich und das zweite Licht in dem zweiten Wellenlängenbereich effizient bereitgestellt werden können. Die erste Lichtquelle oder die zweite Lichtquelle kann eine Halogen-Lichtquelle oder eine LED-Lichtquelle (LED: Light Emitting Diode) sein. Der erste Beleuchtungswinkel und der zweite Beleuchtungswinkel können gleich sein.

Gemäß einer Ausführungsform ist die Beleuchtungseinrichtung ausgebildet, die Dokumentenauflage mit dem ersten Licht in dem ersten Wellenlängenbereich ansprechend auf ein Erreichen der ersten Halteposition durch den verfahrbaren Führungsschlitten zu beleuchten, und die Dokumentenauflage mit dem zweiten Licht in dem zweiten Wellenlängenbereich ansprechend auf ein Erreichen der zweiten Halteposition durch den verfahrbaren Führungsschlitten zu beleuchten. Dadurch wird der Vorteil erreicht, dass eine Beleuchtung der Dokumentenauflage effizient realisiert werden kann. Die Beleuchtung mit dem ersten Licht kann ausgelöst werden, wenn der verfahrbare Führungsschlitten die erste Halteposition erreicht hat. Die Beleuchtung mit dem zweiten Licht kann ausgelöst werden, wenn der verfahrbare Führungsschlitten die zweite Halteposition erreicht hat.

Gemäß einer Ausführungsform umfasst die Bildkamera einen Bildsensor, wobei der Bildsensor ausgebildet ist, das erste Bild in dem ersten Wellenlängenbereich und das zweite Bild in dem zweiten Wellenlängenbereich zu erfassen. Dadurch wird der Vorteil erreicht, dass das erste Bild in dem ersten Wellenlängenbereich und das zweite Bild in dem zweiten Wellenlängenbereich effizient erfasst werden können. Der Bildsensor kann ein CMOS-Bildsensor (CMOS: Complementary Metal Oxide Semiconductor) oder ein CCD-Bildsensor (CCD: Charge Coupled Device) sein.

Gemäß einer Ausführungsform umfasst die Bildkamera einen ersten Bildsensor und einen zweiten Bildsensor, wobei der erste Bildsensor ausgebildet ist, das erste Bild in dem ersten Wellenlängenbereich zu erfassen, und wobei der zweite Bildsensor ausgebildet ist, das zweite Bild in dem zweiten Wellenlängenbereich zu erfassen. Dadurch wird der Vorteil erreicht, dass das erste Bild in dem ersten Wellenlängenbereich und das zweite Bild in dem zweiten Wellenlängenbereich effizient erfasst werden können. Der erste Bildsensor oder der zweite Bildsensor kann ein CMOS-Bildsensor (CMOS: Complementary Metal Oxide Semiconductor) oder ein CCD-Bildsensor (CCD: Charge Coupled Device) sein.

Gemäß einer Ausführungsform ist die Dokumentenauflage in dem ersten Wellenlängenbereich oder in dem zweiten Wellenlängenbereich transparent. Dadurch wird der Vorteil erreicht, dass das Identifikationsdokument auf beiden Seiten der Dokumentenauflage aufgelegt werden kann.

Gemäß einer Ausführungsform umfasst der erste Wellenlängenbereich oder der zweite Wellenlängenbereich einen der folgenden Wellenlängenbereiche: einen Infrarot-Wellenlängenbereich, einen Weißlicht-Wellenlängenbereich, oder einen Ultraviolett-Wellenlängenbereich. Dadurch wird der Vorteil erreicht, dass unterschiedliche Wellenlängenbereiche beim Erfassen des ersten Bildes und des zweiten Bildes verwendet werden können.

Gemäß einem zweiten Aspekt betrifft die Erfindung ein Verfahren zum Erfassen eines ersten Bildes eines Identifikationsdokumentes in einem ersten Wellenlängenbereich und eines zweiten Bildes des Identifikationsdokumentes in einem zweiten Wellenlängenbereich unter Verwendung einer Bildkamera, wobei das Identifikationsdokument auf einer Dokumentenauflage auflegbar ist, wobei die Bildkamera auf einem verfahrbaren Führungsschlitten angeordnet ist, und wobei die Bildkamera ein optisches Objektiv umfasst, mit einem Verfahren des verfahrbaren Führungsschlittens an eine erste Halteposition in einer ersten Entfernung zu der Dokumentenauflage, wobei das optische Objektiv in dem ersten Wellenlängenbereich einen ersten Brennpunkt in der ersten Entfernung aufweist, einem Erfassen des ersten Bildes in dem ersten Wellenlängenbereich an der ersten Halteposition durch die Bildkamera, einem Verfahren des verfahrbaren Führungsschlittens an eine zweite Halteposition in einer zweiten Entfernung zu der Dokumentenauflage, wobei das optische Objektiv in dem zweiten Wellenlängenbereich einen zweiten Brennpunkt in der zweiten Entfernung aufweist, und einem Erfassen des zweiten Bildes in dem zweiten Wellenlängenbereich an der zweiten Halteposition durch die Bildkamera. Dadurch wird der Vorteil erreicht, dass ein effizientes Konzept zum Erfassen eines ersten Bildes eines Identifikationsdokumentes in einem ersten Wellenlängenbereich und eines zweiten Bildes des Identifikationsdokumentes in einem zweiten Wellenlängenbereich realisiert werden kann.

Das Verfahren kann mittels der Bilderfassungsvorrichtung durchgeführt werden. Weitere Merkmale des Verfahrens folgen unmittelbar aus der Funktionalität der Bilderfassungsvorrichtung.

Gemäß einer Ausführungsform umfasst das Verfahren ferner ein Beleuchten der Dokumentenauflage mit einem ersten Licht in dem ersten Wellenlängenbereich durch eine Beleuchtungseinrichtung, und ein Beleuchten der Dokumentenauflage mit einem zweiten Licht in dem zweiten Wellenlängenbereich durch die Beleuchtungseinrichtung. Dadurch wird der Vorteil erreicht, dass das erste Bild in dem ersten Wellenlängenbereich und das zweite Bild in dem zweiten Wellenlängenbereich effizient erfasst werden können.

Gemäß einem dritten Aspekt betrifft die Erfindung eine Dokumentenprüfvorrichtung zum Prüfen eines Identifikationsdokumentes, wobei das Identifikationsdokument eine erste optische Darstellung in einem ersten Wellenlängenbereich aufweist, und wobei das Identifikationsdokument eine zweite optische Darstellung in einem zweiten Wellenlängenbereich aufweist, mit einer Bilderfassungsvorrichtung, welche ausgebildet ist, ein erstes Bild des Identifikationsdokumentes in dem ersten Wellenlängenbereich und ein zweites Bild des Identifikationsdokumentes in dem zweiten Wellenlängenbereich zu erfassen, und einer Vergleichseinrichtung, welche ausgebildet ist, das erste Bild in dem ersten Wellenlängenbereich mit einem ersten Referenzbild zu vergleichen, und das zweite Bild in dem zweiten Wellenlängenbereich mit einem zweiten Referenzbild zu vergleichen, um das Identifikationsdokument zu prüfen. Dadurch wird der Vorteil erreicht, dass das Identifikationsdokument effizient geprüft werden kann. Die Dokumentenprüfvorrichtung kann ferner ausgebildet sein, ein Sicherheitsmerkmal des Identifikationsdokumentes, welches wellenlängenabhängige optische Darstellungen aufweist, zu prüfen.

Das erste Referenzbild und das zweite Referenzbild können in der Dokumentenprüfvorrichtung vorgespeichert sein. Das Vergleichen des ersten Bildes mit dem ersten Referenzbild sowie das Vergleichen des zweiten Bildes mit dem zweiten Referenzbild kann unter Verwendung eines Bildmerkmalsextraktionsverfahrens durchgeführt werden.

Gemäß einem vierten Aspekt betrifft die Erfindung ein Computerprogramm mit einem Programmcode zum Ausführen des Verfahrens, wenn das Computerprogramm auf einem Computer ausgeführt wird. Dadurch wird der Vorteil erreicht, dass das Verfahren automatisiert und wiederholbar durchgeführt werden kann. Die Bilderfassungsvorrichtung kann programmtechnisch eingerichtet sein, um das Computerprogramm auszuführen.

Die Erfindung kann in Hardware und/oder Software realisiert werden.

Weitere Ausführungsbeispiele werden Bezug nehmend auf die beiliegenden Figuren näher erläutert. Es zeigen:
- Fig. 1: ein Diagramm einer Bilderfassungsvorrichtung zum Erfassen eines ersten Bildes eines Identifikationsdokumentes in einem ersten Wellenlängenbereich und eines zweiten Bildes des Identifikationsdokumentes in einem zweiten Wellenlängenbereich gemäß einer Ausführungsform;
- Fig. 2: ein Diagramm eines Verfahrens zum Erfassen eines ersten Bildes eines Identifikationsdokumentes in einem ersten Wellenlängenbereich und eines zweiten Bildes des Identifikationsdokumentes in einem zweiten Wellenlängenbereich unter Verwendung einer Bildkamera gemäß einer Ausführungsform;
- Fig. 3: ein Diagramm einer Dokumentenprüfvorrichtung zum Prüfen eines Identifikationsdokumentes gemäß einer Ausführungsform; und
- Fig. 4: ein Diagramm einer Bilderfassungsvorrichtung zum Erfassen eines ersten Bildes eines Identifikationsdokumentes in einem ersten Wellenlängenbereich und eines zweiten Bildes des Identifikationsdokumentes in einem zweiten Wellenlängenbereich gemäß einer Ausführungsform.

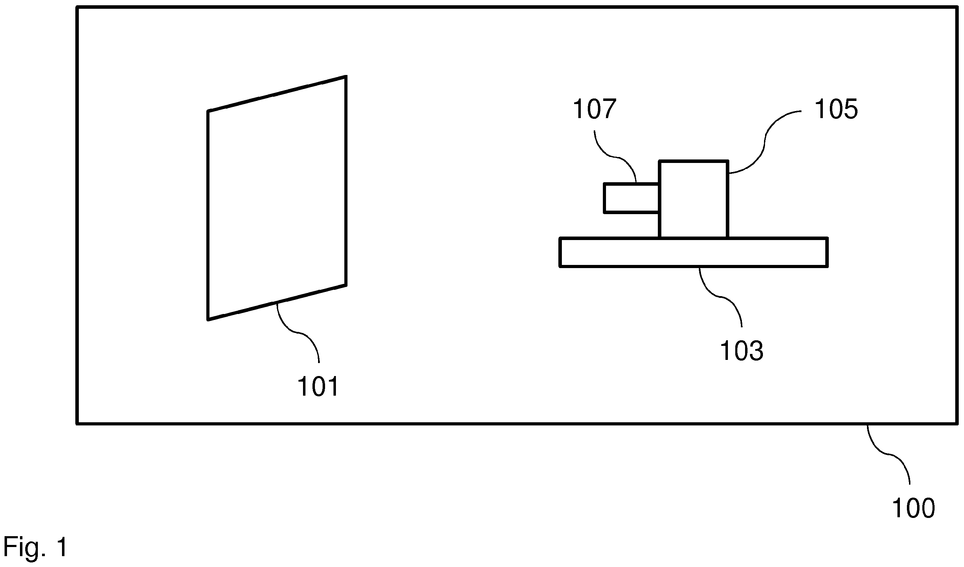

Fig. 1 zeigt ein Diagramm einer Bilderfassungsvorrichtung 100 zum Erfassen eines ersten Bildes eines Identifikationsdokumentes in einem ersten Wellenlängenbereich und eines zweiten Bildes des Identifikationsdokumentes in einem zweiten Wellenlängenbereich gemäß einer Ausführungsform.

Die Bilderfassungsvorrichtung 100 umfasst eine Dokumentenauflage 101 für eine Auflage des Identifikationsdokumentes, einen verfahrbaren Führungsschlitten 103, welcher zwischen einer ersten Halteposition in einer ersten Entfernung zu der Dokumentenauflage 101 und einer zweiten Halteposition in einer zweiten Entfernung zu der Dokumentenauflage 101 verfahrbar ist, und eine Bildkamera 105 mit einem optischen Objektiv 107, wobei das optische Objektiv 107 in dem ersten Wellenlängenbereich einen ersten Brennpunkt in der ersten Entfernung aufweist, wobei das optische Objektiv 107 in dem zweiten Wellenlängenbereich einen zweiten Brennpunkt in der zweiten Entfernung aufweist, und wobei die Bildkamera 105 auf dem verfahrbaren Führungsschlitten 103 angeordnet und ausgebildet ist, das erste Bild in dem ersten Wellenlängenbereich an der ersten Halteposition zu erfassen und das zweite Bild in dem zweiten Wellenlängenbereich an der zweiten Halteposition zu erfassen.

Die erste Halteposition und die zweite Halteposition des verfahrbaren Führungsschlittens 103 können beispielsweise mittels einer Kalibrierung unter Verwendung der Bildkamera 105 und des optischen Objektivs 107 bestimmt werden. Das optische Objektiv 107 ist beim Erfassen des ersten Bildes in dem ersten Wellenlängenbereich und beim Erfassen des zweiten Bildes in dem zweiten Wellenlängenbereich auf die Dokumentenauflage 101 fokussiert.

Das Identifikationsdokument kann eines der folgenden Identifikationsdokumente sein: ein Identitätsdokument, wie beispielsweise ein Personalausweis, ein Reisepass, ein Zugangskontrollausweis, ein Berechtigungsausweis, ein Unternehmensausweis, ein Steuerzeichen, ein Ticket, eine Geburtsurkunde, ein Führerschein, ein Kraftfahrzeugausweis, oder ein Zahlungsmittel, wie beispielsweise eine Bankkarte oder eine Kreditkarte.

Das Identifikationsdokument kann einen elektronisch auslesbaren Schaltkreis, beispielsweise einen RFID-Chip, umfassen. Das Identifikationsdokument kann ein- oder mehrlagig sowie papier- und/oder kunststoffbasiert sein. Das Identifikationsdokument kann aus kunststoffbasierten Folien aufgebaut sein, welche zu einem Kartenkörper mittels Verkleben und/oder Laminieren zusammengefügt sind, wobei die kunststoffbasierten Folien ähnliche stoffliche Eigenschaften aufweisen können.

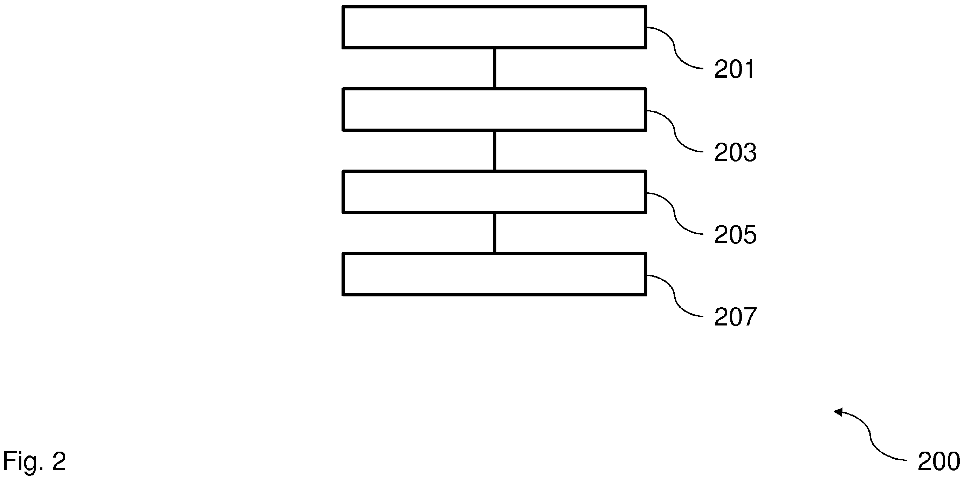

Fig. 2 zeigt ein Diagramm eines Verfahrens 200 zum Erfassen eines ersten Bildes eines Identifikationsdokumentes in einem ersten Wellenlängenbereich und eines zweiten Bildes des Identifikationsdokumentes in einem zweiten Wellenlängenbereich unter Verwendung einer Bildkamera gemäß einer Ausführungsform. Das Identifikationsdokument ist auf einer Dokumentenauflage auflegbar. Die Bildkamera ist auf einem verfahrbaren Führungsschlitten angeordnet. Die Bildkamera umfasst ein optisches Objektiv.

Das Verfahren 200 umfasst ein Verfahren 201 des verfahrbaren Führungsschlittens an eine erste Halteposition in einer ersten Entfernung zu der Dokumentenauflage, wobei das optische Objektiv in dem ersten Wellenlängenbereich einen ersten Brennpunkt in der ersten Entfernung aufweist, ein Erfassen 203 des ersten Bildes in dem ersten Wellenlängenbereich an der ersten Halteposition durch die Bildkamera, ein Verfahren 205 des verfahrbaren Führungsschlittens an eine zweite Halteposition in einer zweiten Entfernung zu der Dokumentenauflage, wobei das optische Objektiv in dem zweiten Wellenlängenbereich einen zweiten Brennpunkt in der zweiten Entfernung aufweist, und ein Erfassen 207 des zweiten Bildes in dem zweiten Wellenlängenbereich an der zweiten Halteposition durch die Bildkamera.

Das Verfahren 200 kann ferner ein Beleuchten der Dokumentenauflage mit einem ersten Licht in dem ersten Wellenlängenbereich durch eine Beleuchtungseinrichtung, und ein Beleuchten der Dokumentenauflage mit einem zweiten Licht in dem zweiten Wellenlängenbereich durch die Beleuchtungseinrichtung umfassen.

Das Verfahren 200 kann mittels der Bilderfassungsvorrichtung 100 durchgeführt werden. Weitere Merkmale des Verfahrens 200 folgen unmittelbar aus der Funktionalität der Bilderfassungsvorrichtung 100.

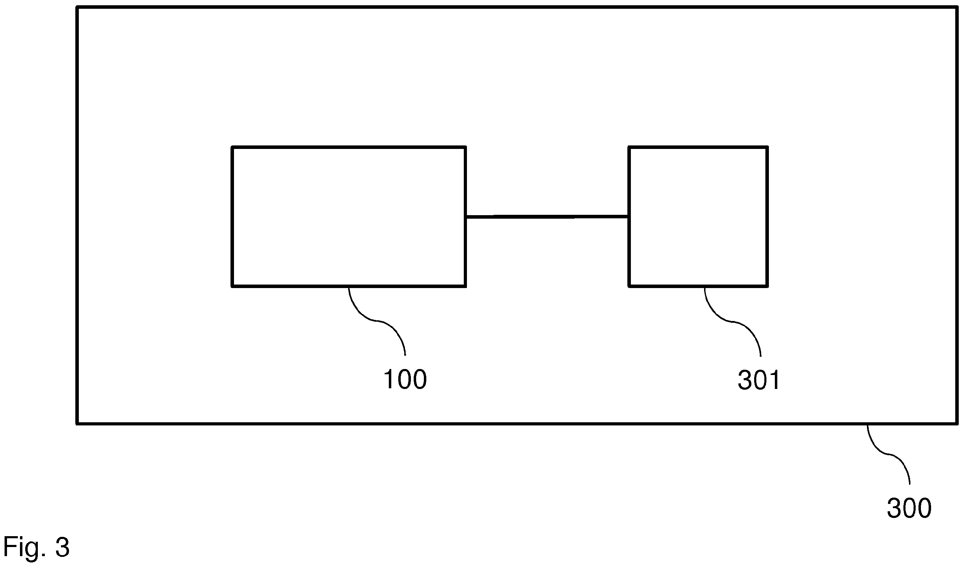

Fig. 3 zeigt ein Diagramm einer Dokumentenprüfvorrichtung 300 zum Prüfen eines Identifikationsdokumentes gemäß einer Ausführungsform. Das Identifikationsdokument weist eine erste optische Darstellung in einem ersten Wellenlängenbereich auf. Das Identifikationsdokument weist eine zweite optische Darstellung in einem zweiten Wellenlängenbereich auf.

Die Dokumentenprüfvorrichtung 300 umfasst eine Bilderfassungsvorrichtung 100, welche ausgebildet ist, ein erstes Bild des Identifikationsdokumentes in dem ersten Wellenlängenbereich und ein zweites Bild des Identifikationsdokumentes in dem zweiten Wellenlängenbereich zu erfassen, und eine Vergleichseinrichtung 301, welche ausgebildet ist, das erste Bild in dem ersten Wellenlängenbereich mit einem ersten Referenzbild zu vergleichen, und das zweite Bild in dem zweiten Wellenlängenbereich mit einem zweiten Referenzbild zu vergleichen, um das Identifikationsdokument zu prüfen.

Das erste Referenzbild und das zweite Referenzbild können in der Dokumentenprüfvorrichtung 300 vorgespeichert sein. Das Vergleichen des ersten Bildes mit dem ersten Referenzbild sowie das Vergleichen des zweiten Bildes mit dem zweiten Referenzbild kann unter Verwendung eines Bildmerkmalsextraktionsverfahrens durchgeführt werden.

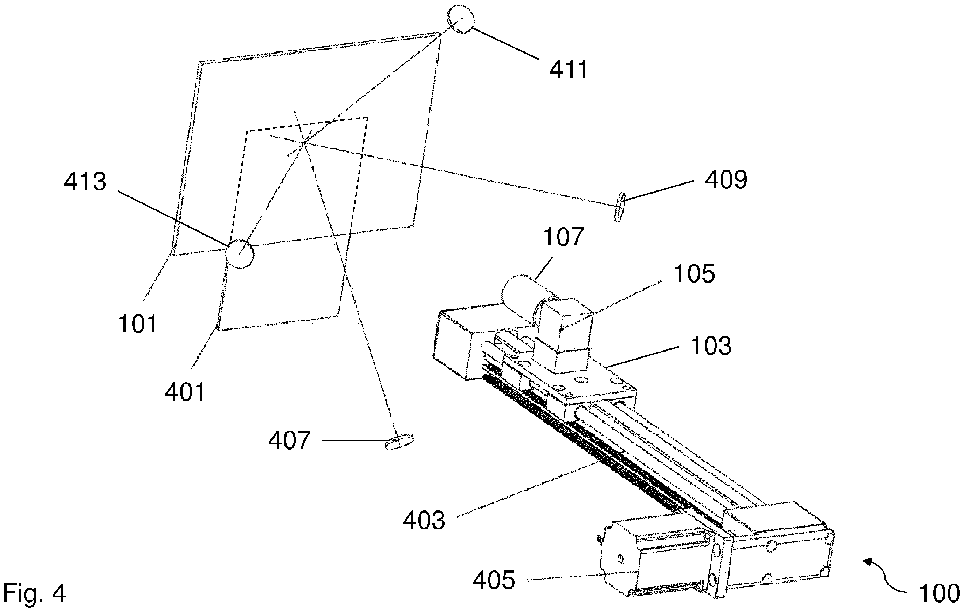

Fig. 4 zeigt ein Diagramm einer Bilderfassungsvorrichtung 100 zum Erfassen eines ersten Bildes eines Identifikationsdokumentes 401 in einem ersten Wellenlängenbereich und eines zweiten Bildes des Identifikationsdokumentes 401 in einem zweiten Wellenlängenbereich gemäß einer Ausführungsform.

Die Bilderfassungsvorrichtung 100 umfasst eine Dokumentenauflage 101 für eine Auflage des Identifikationsdokumentes 401, einen verfahrbaren Führungsschlitten 103, welcher zwischen einer ersten Halteposition in einer ersten Entfernung zu der Dokumentenauflage 101 und einer zweiten Halteposition in einer zweiten Entfernung zu der Dokumentenauflage 101 verfahrbar ist, und eine Bildkamera 105 mit einem optischen Objektiv 107, wobei das optische Objektiv 107 in dem ersten Wellenlängenbereich einen ersten Brennpunkt in der ersten Entfernung aufweist, wobei das optische Objektiv 107 in dem zweiten Wellenlängenbereich einen zweiten Brennpunkt in der zweiten Entfernung aufweist, und wobei die Bildkamera 105 auf dem verfahrbaren Führungsschlitten 103 angeordnet und ausgebildet ist, das erste Bild in dem ersten Wellenlängenbereich an der ersten Halteposition zu erfassen und das zweite Bild in dem zweiten Wellenlängenbereich an der zweiten Halteposition zu erfassen. Das optische Objektiv 107 kann ein optisches Festbrennweiten-Objektiv sein.

Die Bilderfassungsvorrichtung 100 umfasst ferner eine Führungsschiene 403, wobei der verfahrbare Führungsschlitten 103 auf der Führungsschiene 403 verfahrbar angeordnet ist. Die Führungsschiene 403 kann an der ersten Halteposition ein erstes Halteelement und an der zweiten Halteposition ein zweites Halteelement aufweist, um den verfahrbaren Führungsschlitten 103 an der ersten Halteposition und an der zweiten Halteposition zu halten oder anzuhalten. Die Führungsschiene 403 kann einen Linearantrieb umfassen.

Die Bilderfassungsvorrichtung 100 umfasst ferner einen elektrischen Antrieb 405, beispielsweise einen Schrittmotor, wobei der elektrische Antrieb 405 ausgebildet ist, den verfahrbaren Führungsschlitten 103 zwischen der ersten Halteposition in der ersten Entfernung zu der Dokumentenauflage 101 und der zweiten Halteposition in der zweiten Entfernung zu der Dokumentenauflage 101 zu verfahren.

Die Bilderfassungsvorrichtung 100 umfasst ferner eine Beleuchtungseinrichtung, welche ausgebildet ist, die Dokumentenauflage 101 mit einem ersten Licht in dem ersten Wellenlängenbereich und mit einem zweiten Licht in dem zweiten Wellenlängenbereich zu beleuchten. Die Beleuchtungseinrichtung umfasst eine erste Lichtquelle 407, eine zweite Lichtquelle 409, eine dritte Lichtquelle 411 und eine vierte Lichtquelle 413.

Die erste Lichtquelle 407 ist ausgebildet, die Dokumentenauflage 101 mit dem ersten Licht in dem ersten Wellenlängenbereich unter einem ersten Beleuchtungswinkel zu beleuchten. Die zweite Lichtquelle 409 ist ausgebildet, die Dokumentenauflage 101 mit dem zweiten Licht in dem zweiten Wellenlängenbereich unter einem zweiten Beleuchtungswinkel zu beleuchten. Die dritte Lichtquelle 411 ist ausgebildet, die Dokumentenauflage 101 mit einem dritten Licht in dem ersten Wellenlängenbereich, dem zweiten Wellenlängenbereich, oder einem dritten Wellenlängenbereich unter einem dritten Beleuchtungswinkel zu beleuchten. Die vierte Lichtquelle 413 ist ausgebildet, die Dokumentenauflage 101 mit einem vierten Licht in dem ersten Wellenlängenbereich, dem zweiten Wellenlängenbereich, oder einem vierten Wellenlängenbereich unter einem vierten Beleuchtungswinkel zu beleuchten.

Die Erfindung betrifft ein automatisiertes System zur optischen Erfassung oder optischen Aufnahme von Bildern in unterschiedlichen Wellenlängenbereichen, beispielsweise einem Infrarot-Wellenlängenbereich, einem Weißlicht-Wellenlängenbereich oder einem Ultraviolett-Wellenlängenbereich.

Optische Fokuspunkte für eine Erfassung von Bildern in einem Infrarot-Wellenlängenbereich und einem Weißlicht-Wellenlängenbereich liegen üblicherweise auseinander. Zumeist sind die Möglichkeiten eines Autofokus nicht ausreichend, um eine hinreichend gute Qualität der erfassten Bilder zu erreichen. Die Fokussierung oder Scharfstellung von Bildkameras ist folglich häufig nicht ausreichend oder nicht möglich. Der Fokus von Bildkameras wird daher zumeist auf einen Kompromiss eingestellt, wobei unterschiedliche erfasste Bilder nicht hinreichend fokussiert oder scharf sind.

Die Bildkamera kann auf einem verfahrbaren Führungsschlitten befestigt werden und kann über eine Mechanik verfahrbar sein. Somit sind fixe Haltepositionen einstellbar, um ein Optimum an Bildqualität zu erreichen. Die Haltepositionen können mittels einer Kalibrierung ermittelt werden und können jederzeit exakt anfahrbar sein. Durch die Erfindung wird eine verbesserte Erfassung von Bildern, beispielsweise mit einer verbesserten Bildschärfe, erreicht. Zudem wird eine einfache Handhabung ermöglicht.

Als Bildkamera kann eine Digitalkamera und/oder eine industrielle Bildkamera eingesetzt werden. Die Bildkamera kann ein Festobjektiv umfassen, wodurch Änderungen an einer Blende oder einem Fokus nicht möglich sein können. Die Bildkamera kann in einem Infrarot-Wellenlängenbereich eingesetzt werden, wobei im Infrarot-Wellenlängenbereich ein Autofokus zumeist nicht möglich ist. Eine industrielle Bildkamera mit einem Autofokus-Objektiv in einem bestimmten Wellenlängenbereich oder Spektrum kann eingesetzt werden. Dabei ist zu beachten, dass motorische Objektive zumeist keinen Nullpunkt aufweisen, die Bildkameras in einem Gehäuse verbaut sind, und/oder eine Steuerung motorischer Objektive zumeist nur über eine Software möglich ist. Um Anforderungen hinsichtlich einer Wiederholbarkeit und/oder Reproduzierbarkeit der Bilderfassung zu erfüllen, ist eine wiederholbare Einstellung eines Fokuspunktes, beispielsweise auch im Makrobereich, wünschenswert. Daher ist eine externe Fokussierung vorteilhaft.

### BEZUGSZEICHENLISTE

- 100: Bilderfassungsvorrichtung
- 101: Dokumentenauflage
- 103: Verfahrbarer Führungsschlitten
- 105: Bildkamera
- 107: Optisches Objektiv

- 200: Verfahren zum Erfassen eines ersten Bildes und eines zweiten Bildes
- 201: Verfahren des verfahrbaren Führungsschlittens
- 203: Erfassen des ersten Bildes
- 205: Verfahren des verfahrbaren Führungsschlittens
- 207: Erfassen des zweiten Bildes

- 300: Dokumentenprüfvorrichtung
- 301: Vergleichseinrichtung

- 401: Identifikationsdokument
- 403: Führungsschiene
- 405: Elektrischer Antrieb
- 407: Erste Lichtquelle
- 409: Zweite Lichtquelle
- 411: Dritte Lichtquelle
- 413: Vierte Lichtquelle

## Patentansprüche

1. Bilderfassungsvorrichtung (100) zum Erfassen eines ersten Bildes eines Identifikationsdokumentes (401) in einem ersten Wellenlängenbereich und eines zweiten Bildes des Identifikationsdokumentes (401) in einem zweiten Wellenlängenbereich, mit:
einer Dokumentenauflage (101) für eine Auflage des Identifikationsdokumentes (401);
einer Beleuchtungseinrichtung, welche ausgebildet ist, die Dokumentenauflage (101) mit einem ersten Licht in dem ersten Wellenlängenbereich und mit einem zweiten Licht in dem zweiten Wellenlängenbereich zu beleuchten, wobei der erste Wellenlängenbereich und der zweite Wellenlängenbereich unterschiedlich sind,
**gekennzeichnet durch**:
einen verfahrbaren Führungsschlitten (103), welcher zwischen einer ersten Halteposition in einer ersten Entfernung zu der Dokumentenauflage (101) und einer zweiten Halteposition in einer zweiten Entfernung zu der Dokumentenauflage (101) verfahrbar ist; und
eine Bildkamera (105) mit einem optischen Festbrennweiten-Objektiv (107), wobei das optische Objektiv (107) in dem ersten Wellenlängenbereich einen ersten Brennpunkt in der ersten Entfernung aufweist, wobei das optische Objektiv (107) in dem zweiten Wellenlängenbereich einen zweiten Brennpunkt in der zweiten Entfernung aufweist, und wobei die Bildkamera (105) auf dem verfahrbaren Führungsschlitten (103) angeordnet und ausgebildet ist, das erste Bild in dem ersten Wellenlängenbereich an der ersten Halteposition zu erfassen und das zweite Bild in dem zweiten Wellenlängenbereich an der zweiten Halteposition zu erfassen.

2. Bilderfassungsvorrichtung (100) nach Anspruch 1, wobei die Bilderfassungsvorrichtung (100) eine Führungsschiene (403) umfasst, und wobei der verfahrbare Führungsschlitten (103) auf der Führungsschiene (403) verfahrbar angeordnet ist.

3. Bilderfassungsvorrichtung (100) nach Anspruch 2, wobei die Führungsschiene (403) an der ersten Halteposition ein erstes Halteelement und an der zweiten Halteposition ein zweites Halteelement aufweist, um den verfahrbaren Führungsschlitten (103) an der ersten Halteposition und an der zweiten Halteposition zu halten oder anzuhalten.

4. Bilderfassungsvorrichtung (100) nach Anspruch 3, wobei das erste Halteelement oder das zweite Halteelement eine Kerbe, einen Vorsprung, eine Rastung, einen elektrischen Schalter zum Anhalten eines elektrischen Antriebs (405), einen Positionsdetektor, insbesondere eine optische Schranke, oder eine Bremse umfasst.

5. Bilderfassungsvorrichtung (100) nach einem der vorstehenden Ansprüche, wobei die Bilderfassungsvorrichtung (100) einen elektrischen Antrieb (405), insbesondere einen Schrittmotor, umfasst, wobei der elektrische Antrieb (405) ausgebildet ist, den verfahrbaren Führungsschlitten (103) zwischen der ersten Halteposition in der ersten Entfernung zu der Dokumentenauflage (101) und der zweiten Halteposition in der zweiten Entfernung zu der Dokumentenauflage (101) zu verfahren, oder wobei der verfahrbare Führungsschlitten (103) manuell verfahrbar ist.

6. Bilderfassungsvorrichtung (100) nach Anspruch 5, wobei der elektrische Antrieb (405) ausgebildet ist, an der ersten Halteposition des verfahrbaren Führungsschlittens (103) oder an der zweiten Halteposition des verfahrbaren Führungsschlittens (103) anzuhalten.

7. Bilderfassungsvorrichtung (100) nach einem der vorstehenden Ansprüche, wobei die Beleuchtungseinrichtung eine erste Lichtquelle (407) und eine zweite Lichtquelle (409) umfasst, wobei die erste Lichtquelle (407) ausgebildet ist, die Dokumentenauflage (101) mit dem ersten Licht in dem ersten Wellenlängenbereich unter einem ersten Beleuchtungswinkel zu beleuchten, und wobei die zweite Lichtquelle (409) ausgebildet ist, die Dokumentenauflage (101) mit dem zweiten Licht in dem zweiten Wellenlängenbereich unter einem zweiten Beleuchtungswinkel zu beleuchten.

8. Bilderfassungsvorrichtung (100) nach einem der vorstehenden Ansprüche, wobei die Beleuchtungseinrichtung ausgebildet ist, die Dokumentenauflage (101) mit dem ersten Licht in dem ersten Wellenlängenbereich ansprechend auf ein Erreichen der ersten Halteposition durch den verfahrbaren Führungsschlitten (103) zu beleuchten, und die Dokumentenauflage (101) mit dem zweiten Licht in dem zweiten Wellenlängenbereich ansprechend auf ein Erreichen der zweiten Halteposition durch den verfahrbaren Führungsschlitten (103) zu beleuchten.

9. Bilderfassungsvorrichtung (100) nach einem der vorstehenden Ansprüche, wobei die Dokumentenauflage (101) in dem ersten Wellenlängenbereich oder in dem zweiten Wellenlängenbereich transparent ist.

10. Bilderfassungsvorrichtung (100) nach einem der vorstehenden Ansprüche, wobei der erste Wellenlängenbereich oder der zweite Wellenlängenbereich einen der folgenden Wellenlängenbereiche umfasst: einen Infrarot-Wellenlängenbereich, einen Weißlicht-Wellenlängenbereich, oder einen Ultraviolett-Wellenlängenbereich.

11. Verfahren (200) zum Erfassen eines ersten Bildes eines Identifikationsdokumentes (401) in einem ersten Wellenlängenbereich und eines zweiten Bildes des Identifikationsdokumentes (401) in einem zweiten Wellenlängenbereich, wobei der erste Wellenlängenbereich und der zweite Wellenlängenbereich unterschiedlich sind, unter Verwendung einer Bildkamera (105), wobei das Identifikationsdokument (401) auf einer Dokumentenauflage (101) auflegbar ist, wobei die Bildkamera (105) auf einem verfahrbaren Führungsschlitten (103) angeordnet ist, und wobei die Bildkamera (105) ein optisches Festbrennweiten-Objektiv (107) umfasst,
**gekennzeichnet durch**:
Verfahren (201) des verfahrbaren Führungsschlittens (103) an eine erste Halteposition in einer ersten Entfernung zu der Dokumentenauflage (101), wobei das optische Objektiv (107) in dem ersten Wellenlängenbereich einen ersten Brennpunkt in der ersten Entfernung aufweist;
Beleuchten der Dokumentenauflage (101) mit einem ersten Licht in dem ersten Wellenlängenbereich durch eine Beleuchtungseinrichtung;
Erfassen (203) des ersten Bildes in dem ersten Wellenlängenbereich an der ersten Halteposition durch die Bildkamera (105);
Verfahren (205) des verfahrbaren Führungsschlittens (103) an eine zweite Halteposition in einer zweiten Entfernung zu der Dokumentenauflage (101), wobei das optische Objektiv (107) in dem zweiten Wellenlängenbereich einen zweiten Brennpunkt in der zweiten Entfernung aufweist;
Beleuchten der Dokumentenauflage (101) mit einem zweiten Licht in dem zweiten Wellenlängenbereich durch die Beleuchtungseinrichtung; und
Erfassen (207) des zweiten Bildes in dem zweiten Wellenlängenbereich an der zweiten Halteposition durch die Bildkamera (105).

12. Dokumentenprüfvorrichtung (300) zum Prüfen eines Identifikationsdokumentes (401), wobei das Identifikationsdokument (401) eine erste optische Darstellung in einem ersten Wellenlängenbereich aufweist, und wobei das Identifikationsdokument (401) eine zweite optische Darstellung in einem zweiten Wellenlängenbereich aufweist, mit:
einer Bilderfassungsvorrichtung (100) nach einem der Ansprüche 1 bis 10, welche ausgebildet ist, ein erstes Bild des Identifikationsdokumentes (401) in dem ersten Wellenlängenbereich und ein zweites Bild des Identifikationsdokumentes (401) in dem zweiten Wellenlängenbereich zu erfassen; und
einer Vergleichseinrichtung (301), welche ausgebildet ist, das erste Bild in dem ersten Wellenlängenbereich mit einem ersten Referenzbild zu vergleichen, und das zweite Bild in dem zweiten Wellenlängenbereich mit einem zweiten Referenzbild zu vergleichen, um das Identifikationsdokument (401) zu prüfen.

## Claims

1. An image capturing device (100) for capturing a first image of an identification document (401) in a first wavelength range and a second image of the identification document (401) in a second wavelength range, comprising:
a document bed (101) for a placement of the identification document (401);
a lighting device which is configured to illuminate the document bed (101) with a first light in the first wavelength range and with a second light in the second wavelength range, wherein the first wavelength range and the second wavelength range are different,
**characterized by**:
a movable guide carriage (103) which is movable between a first stop position at a first distance to the document bed (101) and a second stop position at a second distance to the document bed (101); and
an image camera (105) comprising an optical fixed focal length lens (107), wherein the optical lens (107) comprises a first focal point in the first wavelength range at the first distance, wherein the optical lens (107) comprises a second focal point in the second wavelength range at the second distance and wherein the image camera (105) is arranged on the guide carriage (103) and configured to capture the first image in the first wavelength range at the first stop position and the second image in the second wavelength range at the second stop position.

2. The image capturing device (100) of claim 1, wherein the image capturing device (100) comprises a guide rail (403) and wherein the movable guide carriage (103) is arranged movably on the guide rail (403).

3. The image capturing device (100) of claim 2, wherein the guide rail (403) comprises a first stop element at the first stop position and a second stop element at the second stop position to stop the movable guide carriage (103) or bring the movable guide carriage (103) to a stop at the first stop position and at the second stop position.

4. The image capturing device (100) of claim 3, wherein the first stop element or the second stop element comprises a notch, a ledge, a detent, an electrical switch for stopping an electrical drive (405), a position detector, in particular an optical barrier, or a brake.

5. The image capturing device (100) according to one of the preceding claims, wherein the image capturing device (100) comprises an electrical drive (405), in particular a stepper motor, wherein the electrical drive (405) is configured to move the movable guide carriage (103) between the first stop position at the first distance to the document bed (101) and the second stop position at the second distance to the document bed (101), or wherein the movable guide carriage (103) can be moved manually.

6. The image capturing device (100) of claim 5, wherein the electrical drive (405) is configured to stop at the first stop position of the movable guide carriage (103) or to stop at the second stop position of the movable guide carriage (103).

7. The image capturing device (100) according to one of the preceding claims, wherein the lighting device comprises a first light source (407) and a second light source (409), wherein the first light source (407) is configured to illuminate the document bed (101) with the first light in the first wavelength range at a first illumination angle and wherein the second light source (409) is configured to illuminate the document bed (101) with the second light in the second wavelength range at a second illumination angle.

8. The image capturing device (100) according to one of the preceding claims, wherein the lighting device is configured to illuminate the document bed (101) with the first light in the first wavelength range in response to the movable guide carriage (103) reaching the first stop position and to illuminate the document bed (101) with the second light in the second wavelength range in response to the movable guide carriage (103) reaching the second stop position.

9. The image capturing device (100) according to one of the preceding claims, wherein the document bed (101) is transparent in the first wavelength range or the second wavelength range.

10. The image capturing device (100) according to one of the preceding claims, wherein the first wavelength or the second wavelength range comprises one of the following wavelength ranges: an infrared wavelength range, a white light wavelength range or an ultraviolet wavelength range.

11. A method (200) for capturing a first image of an identification document (401) in a first wavelength range and a second image of an identification document (401) in a second wavelength range, wherein the first wavelength range and the second wavelength range are different, using an image camera (105), wherein the identification document (401) is placeable on a document bed (101), wherein the image camera (105) is arranged on a guide carriage (103) and wherein the image camera (105) comprises an optical fixed focal length lens (107),
**characterized by**:
moving (201) the movable guide carriage (103) to a first stop position at a first distance to the document bed (101), wherein the optical lens (107) comprises a first focal point in the first wavelength range at the first distance;
illuminating the document bed (101) with a first light in the first wavelength range by a lighting device;
capturing (203) the first image in the first wavelength range at the first stop position by the image camera (105);
moving (205) the movable guide carriage (103) to a second stop position at a second distance to the document bed (101), wherein the optical lens (107) comprises a second focal point in the second wavelength range at the second distance;
illuminating the document bed (101) with a second light in the second wavelength range by the lighting device; and
capturing (207) the second image in the second wavelength range at the second stop position by the image camera (105).

12. A document verifying device (300) to verify an identification document (401), wherein the identification document (401) comprises a first optical representation in a first wavelength range and wherein the identification document (401) comprises a second optical representation in a second wavelength range, comprising:
an image capturing device (100) according to one of claims 1 to 10, which is configured to capture a first image of the identification document (401) in the first wavelength range and to capture a second image of the identification document (401) in the second wavelength range; and
a comparison device (301) which is configured to compare the first image in the first wavelength range with a first reference image and to compare the second image in the second wavelength range with a second reference image to verify the identification document (401).

## Revendications

1. Arrangement d'acquisition d'images (100) destiné à acquérir une première image d'un document d'identification (401) dans une première plage de longueurs d'onde et une deuxième image du document d'identification (401) dans une deuxième plage de longueurs d'onde, comprenant :
un support de document (101) pour y déposer le document d'identification (401) ;
un dispositif d'éclairage, qui est configuré pour éclairer le support de document (101) avec une première lumière dans la première plage de longueurs d'onde et avec une deuxième lumière dans la deuxième plage de longueurs d'onde, la première plage de longueurs d'onde et la deuxième plage de longueurs d'onde étant différentes,
**caractérisé par** :
un chariot de guidage (103) déplaçable, qui peut être déplacé entre une première position d'arrêt à une première distance du support de document (101) et une deuxième position d'arrêt à une deuxième distance du support de document (101) ; et
un appareil photo (105) doté d'un objectif à focale fixe optique (107), l'objectif optique (107) possédant, dans la première plage de longueurs d'onde, un premier foyer à une première distance, l'objectif optique (107) possédant, dans la deuxième plage de longueurs d'onde, un premier foyer à une deuxième distance, et l'appareil photo (105) étant disposé sur le chariot de guidage (103) déplaçable et étant configuré pour capturer la première image dans la première plage de longueurs d'onde à la première position d'arrêt et pour capturer la deuxième image dans la deuxième plage de longueurs d'onde à la deuxième position d'arrêt.

2. Arrangement d'acquisition d'images (100) selon la revendication 1, l'arrangement d'acquisition d'images (100) comportant un rail de guidage (403), et le chariot de guidage (103) déplaçable étant monté de manière à pouvoir être déplacé sur le rail de guidage (403).

3. Arrangement d'acquisition d'images (100) selon la revendication 2, le rail de guidage (403) possédant un premier élément d'arrêt à la première position d'arrêt et un deuxième élément d'arrêt à la deuxième position d'arrêt afin d'arrêter ou de stopper le chariot de guidage (103) déplaçable à la première position d'arrêt ou à la deuxième position d'arrêt.

4. Arrangement d'acquisition d'images (100) selon la revendication 3, le premier élément d'arrêt ou le deuxième élément d'arrêt comportant une entaille, une partie saillante, une encoche, un commutateur électrique destiné à arrêter un mécanisme d'entraînement électrique (405), un détecteur de position, notamment une barrière photoélectrique, ou un frein.

5. Arrangement d'acquisition d'images (100) selon l'une des revendications précédentes, l'arrangement d'acquisition d'images (100) comportant un mécanisme d'entraînement électrique (405), notamment un moteur pas à pas, le mécanisme d'entraînement électrique (405) étant configuré pour déplacer le chariot de guidage (103) déplaçable entre la première position d'arrêt à la première distance du support de document (101) et la deuxième position d'arrêt à la deuxième distance du support de document (101), et le chariot de guidage (103) déplaçable pouvant être déplacé manuellement.

6. Arrangement d'acquisition d'images (100) selon la revendication 5, le mécanisme d'entraînement électrique (405) étant configuré pour stopper à la première position d'arrêt du chariot de guidage (103) déplaçable ou à la deuxième position d'arrêt du chariot de guidage (103) déplaçable.

7. Arrangement d'acquisition d'images (100) selon l'une des revendications précédentes, le dispositif d'éclairage comportant une première source de lumière (407) et une deuxième source de lumière (409), la première source de lumière (407) étant configurée pour éclairer le support de document (101) avec la première lumière dans la première plage de longueurs d'onde sous un premier angle d'éclairage, et la deuxième source de lumière (409) étant configurée pour éclairer le support de document (101) avec la deuxième lumière dans la deuxième plage de longueurs d'onde sous un deuxième angle d'éclairage.

8. Arrangement d'acquisition d'images (100) selon l'une des revendications précédentes, le dispositif d'éclairage étant configuré pour éclairer le support de document (101) avec la première lumière dans la première plage de longueurs d'onde en réaction au fait que le chariot de guidage (103) déplaçable a atteint la première position d'arrêt, et pour éclairer le support de document (101) avec la deuxième lumière dans la deuxième plage de longueurs d'onde en réaction au fait que le chariot de guidage (103) déplaçable a atteint la deuxième position d'arrêt.

9. Arrangement d'acquisition d'images (100) selon l'une des revendications précédentes, le support de document (101) étant transparent dans la première plage de longueurs d'onde ou dans la deuxième plage de longueurs d'onde.

10. Arrangement d'acquisition d'images (100) selon l'une des revendications précédentes, la première plage de longueurs d'onde ou la deuxième plage de longueurs d'onde comportant l'une des plages de longueurs d'onde suivantes : une plage de longueurs d'onde infrarouge, une plage de longueurs d'onde de lumière blanche ou une plage de longueurs d'onde ultraviolette.

11. Procédé (200) pour acquérir une première image d'un document d'identification (401) dans une première plage de longueurs d'onde et une deuxième image du document d'identification (401) dans une deuxième plage de longueurs d'onde, la première plage de longueurs d'onde et la deuxième plage de longueurs d'onde étant différentes, en utilisant un appareil photo (105), le document d'identification (401) pouvant être déposé sur un support de document (101), l'appareil photo (105) étant disposé sur un chariot de guidage (103) déplaçable et l'appareil photo (105) comportant un objectif à focale fixe optique (107),
**caractérisé par** :
le déplacement (201) du chariot de guidage (103) déplaçable à une première position d'arrêt à une première distance du support de document (101), l'objectif optique (107) possédant, dans la première plage de longueurs d'onde, un premier foyer à une première distance ;
l'éclairage du support de document (101) avec une première lumière dans la première plage de longueurs d'onde par un dispositif d'éclairage ;
l'acquisition (203) de la première image dans la première plage de longueurs d'onde à la première position d'arrêt par l'appareil photo (105) ;
le déplacement (205) du chariot de guidage (103) déplaçable à une deuxième position d'arrêt à une deuxième distance du support de document (101), l'objectif optique (107) possédant, dans la deuxième plage de longueurs d'onde, un deuxième foyer à une deuxième distance ;
l'éclairage du support de document (101) avec une deuxième lumière dans la deuxième plage de longueurs d'onde par le dispositif d'éclairage ; et
l'acquisition (207) de la deuxième image dans la deuxième plage de longueurs d'onde à la deuxième position d'arrêt par l'appareil photo (105).

12. Arrangement de contrôle de documents (300) destiné à contrôler un document d'identification (401), le document d'identification (401) possédant une première représentation optique dans une première plage de longueurs d'onde, et le document d'identification (401) possédant une deuxième représentation optique dans une deuxième plage de longueurs d'onde, comprenant :
un arrangement d'acquisition d'images (100) selon l'une des revendications 1 à 10, lequel est configuré pour acquérir une première image du document d'identification (401) dans la première plage de longueurs d'onde et une deuxième image du document d'identification (401) dans la deuxième plage de longueurs d'onde ; et
un dispositif de comparaison (301), qui est configuré pour comparer la première image dans la première plage de longueurs d'onde avec une première image de référence, et la deuxième image dans la deuxième plage de longueurs d'onde avec une deuxième image de référence en vue de contrôler le document d'identification (401).
